# EUROPEAN PATENT APPLICATION

(11) **EP 4 317 718 A1**
(43) Date of publication of application: **07.02.2024**
(21) Application number: 22780001.8
(22) Date of filing: 11.03.2022
(51) Int. Cl.: F16C 19/06, F16C 33/44, F16C 33/58, F16C 41/00, H02K 5/16, H02K 7/08, H02K 24/00, G01D 5/20, H02K 11/215

(54) **RESOLVER INTEGRATED-TYPE BEARING DEVICE AND METHOD FOR MANUFACTURING SAME**

(30) Priority: 31.03.2021 JP 2021062263; 31.03.2021 JP 2021062264; 31.03.2021 JP 2021062265
(71) Applicant: NSK Ltd., Tokyo 141-8560 (JP)
(72) Inventor: KATTO Satoshi, Fujisawa-shi, Kanagawa 251-8501 (JP); IWANAGA Yasuhiro, Fujisawa-shi, Kanagawa 251-8501 (JP)
(74) Representative: Grünecker Patent- und Rechtsanwälte PartG mbB
(86) International application number: PCT/JP2022/011033
(87) International publication number: WO 2022/209780

(57) **Abstract**

A resolver integrated-type bearing device (10) includes: a bearing (20) configured to rotatably support a rotating shaft (11) with respect to a housing (50); a rotor (31) attached to the rotating shaft (11); and a stator (32) disposed radially outward of the rotor (31) with a gap therebetween. A stator core (34) of the stator (32) is integrally attached to the bearing (20).

## Description

### Technical Field

The present invention relates to a resolver integrated-type bearing device including a resolver capable of detecting a rotation angle of a rotating shaft.

### Background Art

PTL 1 discloses a resolver in which a stator provided with a plurality of protrusions on an outer periphery thereof is press-fitted and fixed to a case member formed by stamping, the case member is fixed to a housing by bolts, and the stator can be attached without being affected by strain of the case member. Further, PTL 2 discloses a rolling bearing unit equipped with a sensor, in which a stator is press-fitted to an inner peripheral surface of an outer ring of a rolling bearing, and an eccentric cylindrical rotor is provided at a position facing a stator on an outer peripheral surface of an inner ring, and cost reduction and compactness are achieved.

### Citation List

### Patent Literature

PTL 1: JP5870607B
PTL 2: JP4238576B

### Summary of Invention

### Technical Problem

However, according to the resolver in PTL 1, since the stator is press-fitted and fixed to the case member made of a plate material that is thin enough to allow stamping, the case member may be deformed and the stator may become eccentric. Therefore, a possibility that detection accuracy decreases cannot be eliminated, and there is room for improvement. Further, since the case member is fixed to the housing by bolts in order to prevent creep, there are problems such as an increase in the number of components and an increase in size and weight. Further, according to the rolling bearing unit equipped with the sensor in PTL 2, since the stator is press-fitted and fixed to the inner peripheral surface of the outer ring, depending on a press-fit state, the stator may creep against the outer ring and affect a detection angle.

The invention has been made in view of the above problems, and an object of the invention is to provide a resolver integrated-type bearing device and a method for manufacturing same in which a stator core of a stator is improved in handleability and detection accuracy.

### Solution to Problem

The above object of the invention is achieved by the following configuration.
[1] A resolver integrated-type bearing device including:
   a bearing configured to rotatably support a rotating shaft with respect to a housing;
   a rotor attached to the rotating shaft; and
   a stator disposed radially outward of the rotor with a gap therebetween, in which
   a stator core of the stator is integrally attached to the bearing.
[2] A resolver integrated-type bearing device including:
   a bearing configured to rotatably support a rotating shaft with respect to a housing;
   a rotor attached to the rotating shaft;
   a stator disposed radially outward of the rotor with a gap therebetween; and
   a stator holder attached to an outer ring of the bearing and configured to hold the stator core of the stator, in which
   the stator holder is made of synthetic resin, is fixed to an inner peripheral surface of the outer ring, and is fitted to an outer peripheral surface of the stator core.
[3] A resolver integrated-type bearing device including:
   a bearing configured to rotatably support a rotating shaft with respect to a housing;
   a rotor attached to the rotating shaft;
   a stator disposed radially outward of the rotor with a gap therebetween; and
   a stator holder attached to an outer ring of the bearing and configured to hold the stator core of the stator, in which
   the stator core is fixed to the stator holder by a rivet.
[4] A method for manufacturing the resolver integrated-type bearing device according to [3], in which
   the rivet fixes the stator core and the stator holder after centering the rotor and the stator.
[5] A resolver integrated-type bearing device including:
   a bearing configured to rotatably support a rotating shaft with respect to a housing;
   a rotor attached to the rotating shaft;
   a stator disposed radially outward of the rotor with a gap therebetween; and
   a stator holder attached to an outer ring of the bearing and configured to hold the stator core of the stator, in which
   the housing is fitted to the outer ring of the bearing and covers an outer peripheral surface of the stator holder, and a part of a portion covering the outer peripheral surface of the stator holder, in a circumferential direction, is formed with a notched groove, and
   the stator holder is made of synthetic resin and includes a protrusion for creep prevention engaged with the notched groove of the housing.

### Advantageous Effects of Invention

With the resolver integrated-type bearing device and the method for manufacturing same according to the invention, the handleability and the detection accuracy of the stator core of the stator can be improved.

### Brief Description of Drawings

FIG. 1 is a cross-sectional view of a resolver integrated-type bearing device according to an embodiment of the invention, taken along line I-I in FIG. 3.
FIG. 2 is a view of the resolver integrated-type bearing device shown in FIG. 1, taken in a direction of arrow II.
FIG. 3 is a view of the resolver integrated-type bearing device shown in FIG. 1, taken in a direction of arrow III.
FIG. 4 is an exploded perspective view of the resolver integrated-type bearing device.

### Description of Embodiments

Hereinafter, an embodiment of a resolver integrated-type bearing device according to the invention will be described in detail with reference to the drawings.

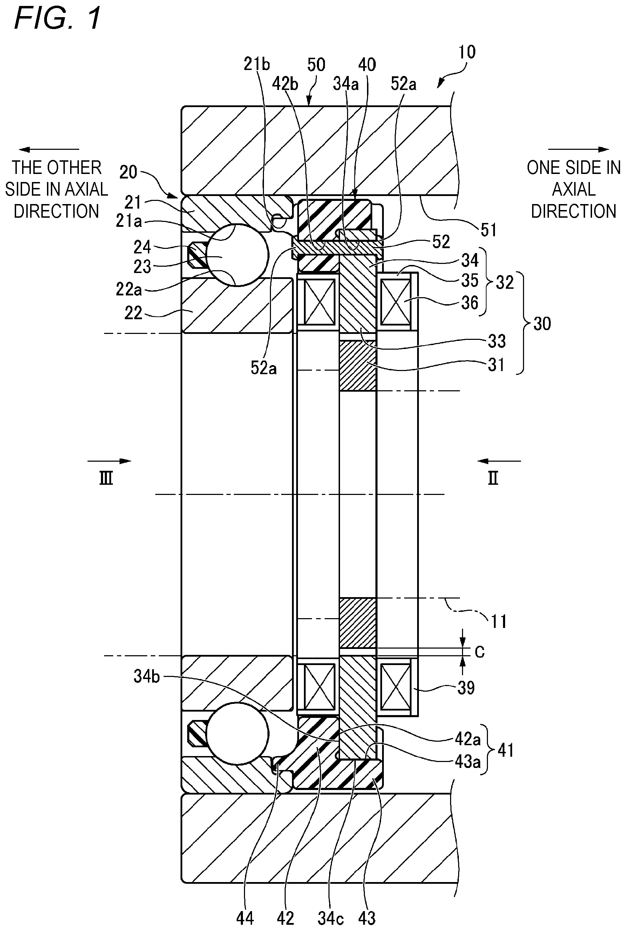

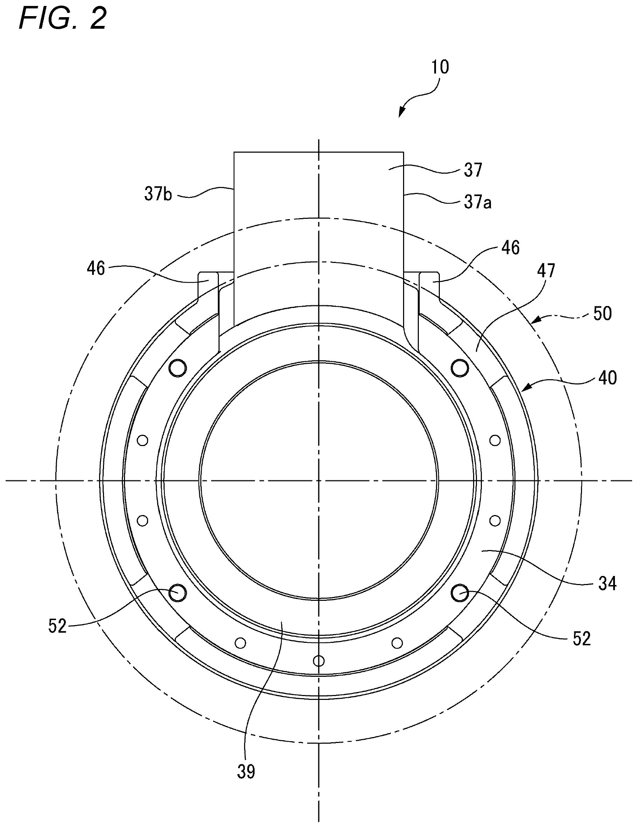

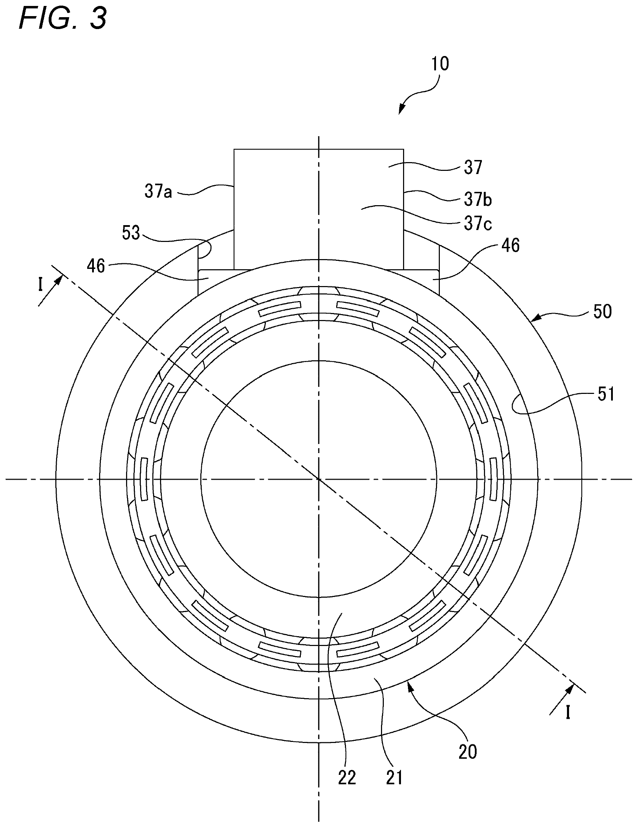

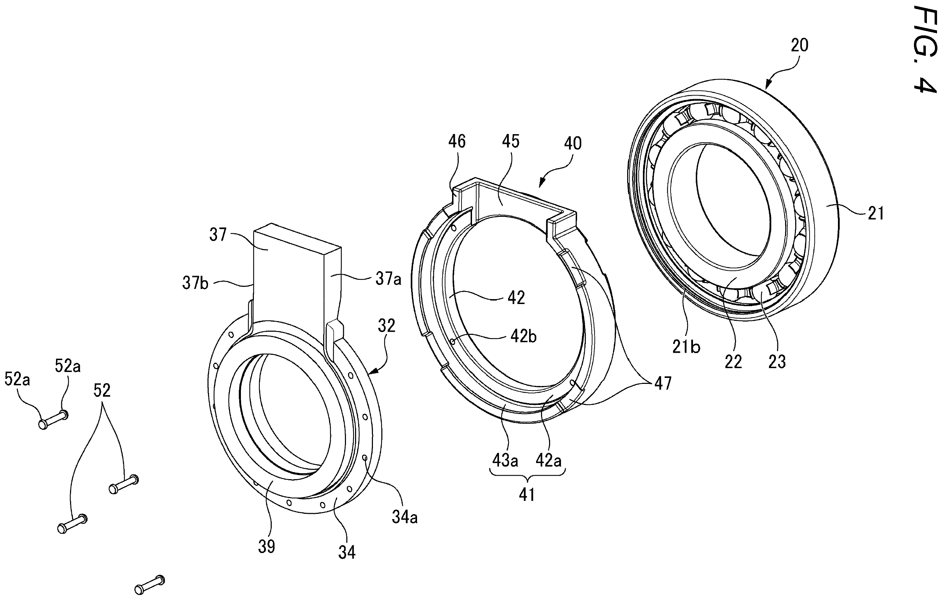

As shown in FIG. 1 to FIG. 4, a resolver integrated-type bearing device 10 according to the present embodiment includes a rolling bearing 20 that rotatably supports a rotating shaft 11 with respect to a housing 50, and a resolver 30 that detects a rotation angle of the rotating shaft 11 of a motor generator used in, for example, a hybrid vehicle.

The rolling bearing 20 includes an outer ring 21 that is fitted to an inner peripheral surface 51 of the cylindrical housing 50 and has an outer ring raceway 21a formed on an inner peripheral surface thereof, an inner ring 22 that is fitted to an outer peripheral surface of the rotating shaft 11 and has an inner ring raceway 22a formed on an outer peripheral surface thereof, and a plurality of balls 23 that are rolling elements disposed between the outer ring raceway 21a and the inner ring raceway 22a and that are held by a cage 24 (in the present embodiment, a resin crown-shaped cage) in a freely rotatable manner.

The rolling bearing 20 is not limited to a ball bearing, and may be another type of rolling bearing.

The resolver 30 includes a rotor 31 that is fixed to the rotating shaft 11 and rotates together with the rotating shaft 11, and a stator 32 that is disposed radially outward of the rotor 31 with a radial gap C therebetween. The rotor 31 has a non-circular shape whose outer diameter dimension varies in a circumferential direction such that the radial gap C between the rotor 31 and the stator 32 changes with rotation.

Therefore, when the rotating shaft 11 rotates, the rotor 31 rotates integrally, a gap between each tooth 33 of the stator 32 and the rotor 31 changes, and a voltage corresponding to the rotation angle of the rotor 31 is obtained in a coil 36 of the stator 32.

The stator 32 includes a stator core 34 formed by laminating a plurality of substantially annular silicon steel plates and provided with a plurality of teeth 33 protruding radially inboard on an inner peripheral surface thereof, and coils 36 wound around the teeth 33 of the stator core 34 via insulators 35. The insulator 35 is made of an insulating material such as synthetic resin to insulate the tooth 33 from the coil 36.

As in the present embodiment, a front surface side (right side in FIG. 1) of the coil 36 may be covered by a cover 39 having an annular plate shape.

A terminal block 37 having a substantially rectangular box shape is attached to an outer peripheral surface of the stator core 34 so as to protrude radially outward. A plurality of terminals (not shown) connected to the coils 36 of the stator 32 are led out to an outside via the terminal block 37.

The stator core 34 is fixed to a stator holder 40. The stator holder 40 is made of synthetic resin and includes an annular plate portion 42, an annular convex portion 44 protruding from a radially intermediate portion of the annular plate portion 42 on the other side in an axial direction (left side in FIG. 1) to the other side in the axial direction, and an annular portion 43 extending from an outer peripheral portion of the annular plate portion 42 on one side in the axial direction (right side in FIG. 1) to the one side in the axial direction.

The annular convex portion 44 is press-fitted into an annular concave portion 21b formed in the inner peripheral surface by cutting out a shoulder portion of the outer ring 21, and the stator holder 40 is integrally fixed to the outer ring 21. Accordingly, the stator core 34 of the stator 32 is integrally attached to the rolling bearing 20 via the stator holder 40.

Therefore, in the present embodiment, the annular concave portion 21b is formed on an opposite side in the axial direction to a circular annular portion of the crown-shaped cage 24 with respect to the ball 23. That is, the resolver 30 is disposed on a pocket opening side of the resin crown-shaped cage 24 via the stator holder 40.

Here, in a case in which an iron cage is used as the cage, when the iron cage which is a magnetic body is close to the resolver 30, magnetic flux may be disturbed, and detection accuracy of the resolver 30 may be affected. In this case, it is necessary to increase a bearing width and dispose the resolver 30 and the iron cage apart from each other, which may increase a size and cost. Therefore, the above problems can be solved by disposing the resolver 30 on the pocket opening side of the resin crown-shaped cage 24 as in the present embodiment.

Further, the stator holder 40 is formed with a stator accommodation portion 41 having a substantially L-shaped cross section that accommodates the stator core 34 by a side surface 42a of the annular plate portion 42 on the one side in the axial direction and an inner peripheral surface 43a of the annular portion 43. When the stator core 34 is accommodated in the stator accommodation portion 41, an outer peripheral surface 34c of the stator core 34 is fitted to the inner peripheral surface 43a, and a side surface 34b of the stator core 34 on the other side in the axial direction comes into contact with the side surface 42a of the annular plate portion 42.

The stator holder 40 is made of synthetic resin and has a coefficient of linear thermal expansion equivalent to that of the stator core 34. Accordingly, even when a temperature of the resolver 30 changes, a fitting state between the stator core 34 and the stator holder 40 changes little, eccentricity of the stator core 34 is prevented to maintain high detection accuracy. Further, when the stator holder 40 is formed by injection molding, other portions attached to the stator holder 40 can be simultaneously molded, and the number of components can be reduced.

The stator core 34 is fitted to the stator accommodation portion 41 by clearance fit, centered with respect to the rotor 31, and then fixed to the stator holder 40 by a plurality of rivets 52. The rivet 52 is inserted through a rivet hole 34a provided on an outer peripheral side of the stator core 34 and a rivet hole 42b penetrating the annular plate portion 42 in the axial direction from the side surface 42a of the annular plate portion 42 on the one side in the axial direction, and is crimped from both sides, so that the stator core 34 is fixed to the stator holder 40.

Both side surfaces of the stator holder 40 are provided with radial grooves 47 radially outward corresponding to the rivet holes 42b. Head portions 52a of the crimped rivet 52 are configured so as not to protrude from both side surfaces of the stator holder 40.

In this way, since the stator core 34 is fitted to the stator accommodation portion 41 by clearance fit and is rivet fastened in a state of being centered with respect to the rotor 31, no radial stress is applied from the stator holder 40 to the stator core 34, and a decrease in accuracy due to the eccentricity of the stator core 34 is prevented.

In a case in which there is a concern that use of the metal rivet 52 may affect the magnetic flux, by providing a provision position of the rivet 52 between the coils 36, an effect on the magnetic flux is reduced.

Further, by setting the number of rivet holes 34a into which the rivets 52 are inserted to 1/N (N: integer) of the number of coils 36, the effect on the magnetic flux can be equalized, which is preferable. In the present embodiment, the number of rivet holes 34a is greater than the number of rivets 52. Further, the number of rivet holes 34a is calculated on an assumption that the rivet holes 34a are disposed at equal intervals in the circumferential direction without considering a region of the terminal block 37.

Fixing of the stator core 34 and the stator holder 40 is not limited to the rivet 52, and may be performed by bonding or press-fitting. In a case in which the stator core 34 is fixed to the stator accommodation portion 41 by bonding, similarly to the fixing by the rivet 52, since the stator core 34 and the stator accommodation portion 41 are fitted to each other by clearance fit and are bonded to each other in a state of being centered with respect to the rotor 31, no radial stress is applied from the stator holder 40 to the stator core 34, and a decrease in accuracy due to the eccentricity of the stator core 34 is prevented.

Further, in a case of press-fitting, the stator core 34 is press-fitted into the stator accommodation portion 41, but by making the stator holder 40 made of resin, a radial thickness of the annular portion 43 can be easily increased. Therefore, the annular portion 43 is less likely to be deformed than a thin plate case member formed by stamping in the related art, and the eccentricity of the stator core 34 due to deformation of the annular portion 43 can be prevented. Therefore, a decrease in accuracy due to the eccentricity of the stator core 34 is prevented.

For example, in the present embodiment, the outer peripheral surface of the annular portion 43 closely faces the inner peripheral surface 51 of the housing 50, and the inner peripheral surface 43a of the annular portion 43 is positioned radially inward than an outer peripheral surface of the annular convex portion 44, so that the annular portion 43 is formed to have a large radial thickness.

Further, since the stator holder 40 is configured to come into contact with the axial side surface 34b of the stator core 34, a component such as a shim for ensuring an axial distance between the stator core 34 and the rolling bearing 20, which is necessary for a case member formed by stamping, is not necessary, and the number of components can be reduced.

Further, the stator holder 40 is formed with an open groove 45 having a substantially U-shaped cross section, which is open toward the stator 32, by cutting out a part of a fitting portion in the circumferential direction that is fitted to the outer peripheral surface of the stator core 34. An edge portion of the stator holder 40 forming the open groove 45 surrounds both side surfaces 37a and 37b of the terminal block 37 and a side surface 37c on a bearing 20 side. Accordingly, the terminal block 37 of the stator can be made to protrude radially outward, and an axial thickness of the stator 32 can be reduced to contribute to compactness and weight reduction.

Further, the edge portion of the stator holder 40 forming the open groove 45 is formed with a protrusion 46 that protrudes radially outward.

Further, a part of the housing 50 in the circumferential direction is provided with a notched groove 53 that penetrates in the radial direction and is open to the rolling bearing 20 side and has a U-shape in a top view. An edge portion of the housing forming the notched groove 53 comes into contact with a circumferential side surface of the protrusion 46 of the stator holder 40, and the protrusion 46 of the stator holder 40 engages with the notched groove 53 of the housing 50, thereby preventing rotation of the stator holder 40. Therefore, creep of the rolling bearing 20 fixed to the stator holder 40 can be prevented.

When the outer ring 21 of the rolling bearing 20 rotates due to creep, the stator holder 40 fixed to the outer ring 21 and the stator core 34 also rotate. Rotation of the stator core 34 directly affects detection accuracy of a detection angle and control of the motor based on the detection angle. In an extreme case, a cable or a connector of the resolver integrated-type bearing device 10 may be broken.

However, in the resolver integrated-type bearing device 10 according to the present embodiment, creep of the outer ring 21 can be prevented, and a decrease in detection accuracy of the starter 32 attached to the outer ring 21 can be prevented. Further, it is not necessary to screw the stator holder 40 to the housing 50, which contributes to a reduction in the number of components, a reduction in the number of assembly steps, and compactness of the resolver integrated-type bearing device 10.

The invention is not limited to the above embodiment, and can be appropriately modified, improved, or the like.

As described above, the following matters are disclosed in the present description.
(1) A resolver integrated-type bearing device including:
   a bearing configured to rotatably support a rotating shaft with respect to a housing;
   a rotor attached to the rotating shaft; and
   a stator disposed radially outward of the rotor with a gap therebetween, in which
   a stator core of the stator is integrally attached to the bearing.
   According to this configuration, handleability of the stator core of the stator can be improved.
(2) The resolver integrated-type bearing device according to (1), further including:
   a stator holder attached to an outer ring of the bearing and configured to hold the stator core of the stator, in which
   the stator core of the stator is integrally attached to the bearing via the stator holder.
   According to this configuration, handleability of the stator core of the stator can be improved.
(3) The resolver integrated-type bearing device according to (2), in which
   the stator holder is made of synthetic resin, is fixed to an inner peripheral surface of the outer ring, and is fitted to an outer peripheral surface of the stator core.
   According to this configuration, since the radial thickness of the stator holder can be increased by the stator holder made of synthetic resin, eccentricity of the stator can be prevented, and detection accuracy can be improved.
(4) The resolver integrated-type bearing device according to (3), in which
   the stator holder comes into contact with an axial side surface of the stator core.
   According to this configuration, it is not necessary to provide a shim for positioning the stator, and the number of components can be reduced.
(5) The resolver integrated-type bearing device according to (3) or (4), in which
   the stator core is inserted into a stator accommodation portion of the stator holder for accommodating the stator core, and is fixed to the stator holder by press-fitting, bonding, or a rivet.
   According to this configuration, the stator can be securely fixed to the stator holder while preventing the eccentricity of the stator.
(6) The resolver integrated-type bearing device according to any one of (3) to (5), in which
   the stator holder has a coefficient of linear thermal expansion equivalent to that of a material of the stator core.
   According to this configuration, even when a temperature of the resolver changes, there is no change in positional relation between the stator holder and the stator core, and high detection accuracy can be maintained.
(7) The resolver integrated-type bearing device according to any one of (3) to (6), in which
   a terminal block to which cables connected to coils of the stator are connected is attached to the outer peripheral surface of the stator core, and
   the stator holder includes an open groove surrounding the terminal block.
   According to this configuration, an axial thickness of the stator including the terminal block can be reduced to contribute to compactness and weight reduction.
(8) The resolver integrated-type bearing device according to (2), in which
   the stator core is fixed to the stator holder by a rivet.
   According to this configuration, after the stator core and the rotor are centered, the stator and the stator holder can be securely fixed to each other by the rivet, and thus the eccentricity of the stator can be prevented, and the detection accuracy can be improved.
(9) The resolver integrated-type bearing device according to (8), in which
   the stator holder is made of resin.
   According to this configuration, a radial stress caused by the stator holder applied to the stator core can be reduced, and the detection accuracy of the resolver can be improved.
(10) The resolver integrated-type bearing device according to (8) or (9), in which
   the stator core of the stator is fitted into the stator holder by clearance fit.
   According to this configuration, centering between the stator core and the rotor is easy, the radial stress caused by the stator holder applied to the stator core is reduced, and the detection accuracy is improved.
(11) The resolver integrated-type bearing device according to any one of (8) to (10), in which
   the rivet fixes the stator core and the stator holder between coils of the stator adjacent to each other in a circumferential direction.
   According to this configuration, an effect of the metal rivet on the magnetic flux can be reduced.
(12) The resolver integrated-type bearing device according to any one of (8) to (11), in which
   the number of rivet holes in the stator core is 1/N of the number of a plurality of coils provided in the stator.
   According to this configuration, by setting the number of rivet holes to 1/N of the number of coils, the effect of the rivet holes in the metal stator core on the magnetic flux can be equalized.
(13) The resolver integrated-type bearing device according to (2), in which
   the housing is fitted to the outer ring of the bearing and covers an outer peripheral surface of the stator holder, and a part of a portion covering the outer peripheral surface of the stator holder, in a circumferential direction, is formed with a notched groove, and
   the stator holder is made of synthetic resin and includes a protrusion for creep prevention engaged with the notched groove of the housing.
   According to this configuration, creep of the outer ring can be prevented, and high detection accuracy of the starter attached to the outer ring can be maintained.
(14) The resolver integrated-type bearing device according to (13), in which
   a terminal block to which cables connected to coils of the stator are connected is attached to an outer peripheral surface of the stator core,
   the stator holder includes an open groove formed by cutting out a part of a fitting portion in the circumferential direction, the fitting portion fitting with the outer peripheral surface of the stator core so as to surround a side surface of the terminal block, and
   the protrusion for creep prevention is formed by radially outboard extending an edge portion forming the open groove.
   According to this configuration, the creep of the outer ring can be prevented using the open groove of the stator holder for disposing the terminal block attached to the stator core, and an increase in the number of components can be reduced.
(15) The resolver integrated-type bearing device according to any one of (3) to (14), in which
   the bearing includes a resin cage.
   According to this configuration, the cage does not affect the magnetic flux of the resolver, and it is not necessary to increase a size of the bearing device.
(16) A method for manufacturing the resolver integrated-type bearing device according to any one of (8) to (12) and (15), in which
   the rivet fixes the stator core and the stator holder after centering the rotor and the stator.
   According to this configuration, the eccentricity of the stator with respect to the rotor is reduced, and the detection accuracy is improved.

The present application is based on Japanese Patent Application No. 2021-062263 filed on March 31,2021, Japanese Patent Application No. 2021-062264 filed on March 31, 2021, and Japanese Patent Application No. 2021-062265 filed on March 31, 2021, the contents of which are incorporated herein by reference.

### Reference Signs List

10: resolver integrated-type bearing device
11: rotating shaft
20: bearing
21: outer ring
30: resolver
31: rotor
32: stator
34: stator core
34c: outer peripheral surface
36: coil
37: terminal block
37a, 37b, and 37c: side surface
40: stator holder
45: open groove
46: protrusion
50: housing
53: notched groove
C: radial gap

## Claims

1. A resolver integrated-type bearing device comprising:
a bearing configured to rotatably support a rotating shaft with respect to a housing;
a rotor attached to the rotating shaft; and
a stator disposed radially outward of the rotor with a gap therebetween, wherein
a stator core of the stator is integrally attached to the bearing.

2. The resolver integrated-type bearing device according to claim 1, further comprising:
a stator holder attached to an outer ring of the bearing and configured to hold the stator core of the stator, wherein
the stator core of the stator is integrally attached to the bearing via the stator holder.

3. The resolver integrated-type bearing device according to claim 2, wherein
the stator holder is made of synthetic resin, is fixed to an inner peripheral surface of the outer ring, and is fitted to an outer peripheral surface of the stator core.

4. The resolver integrated-type bearing device according to claim 3, wherein
the stator holder comes into contact with an axial side surface of the stator core.

5. The resolver integrated-type bearing device according to claim 3 or 4, wherein
the stator core is inserted into a stator accommodation portion of the stator holder for accommodating the stator core, and is fixed to the stator holder by press-fitting, bonding, or a rivet.

6. The resolver integrated-type bearing device according to any one of claims 3 to 5, wherein
the stator holder has a coefficient of linear thermal expansion equivalent to that of a material of the stator core.

7. The resolver integrated-type bearing device according to any one of claims 3 to 6, wherein
a terminal block to which cables connected to coils of the stator are connected is attached to the outer peripheral surface of the stator core, and
the stator holder includes an open groove surrounding the terminal block.

8. The resolver integrated-type bearing device according to claim 2, wherein
the stator core is fixed to the stator holder by a rivet.

9. The resolver integrated-type bearing device according to claim 8, wherein
the stator holder is made of resin.

10. The resolver integrated-type bearing device according to claim 8 or 9, wherein
the stator core of the stator is fitted to the stator holder by clearance fit.

11. The resolver integrated-type bearing device according to any one of claims 8 to 10, wherein
the rivet fixes the stator core and the stator holder between coils of the stator adjacent to each other in a circumferential direction.

12. The resolver integrated-type bearing device according to any one of claims 8 to 11, wherein
the number of rivet holes in the stator core is 1/N of the number of a plurality of coils provided in the stator.

13. The resolver integrated-type bearing device according to claim 2, wherein
the housing is fitted to the outer ring of the bearing and covers an outer peripheral surface of the stator holder, and a part of a portion covering the outer peripheral surface of the stator holder, in a circumferential direction, is formed with a notched groove, and
the stator holder is made of synthetic resin and includes a protrusion for creep prevention engaged with the notched groove of the housing.

14. The resolver integrated-type bearing device according to claim 13, wherein
a terminal block to which cables connected to coils of the stator are connected is attached to an outer peripheral surface of the stator core,
the stator holder includes an open groove formed by cutting out a part of a fitting portion in the circumferential direction, the fitting portion fitting with the outer peripheral surface of the stator core so as to surround a side surface of the terminal block, and
the protrusion for creep prevention is formed by radially outboard extending an edge portion forming the open groove.

15. The resolver integrated-type bearing device according to any one of claims 3 to 14, wherein
the bearing includes a resin cage.

16. A method for manufacturing the resolver integrated-type bearing device according to any one of claims 8 to 12 and claim 15, wherein
the rivet fixes the stator core and the stator holder after centering the rotor and the stator.
